(19)

Europäisches Patentamt
European Patent Office
Office européen des brevets

(11) **EP 4 049 974 A1**

(12) **EUROPEAN PATENT APPLICATION**
published in accordance with Art. 153(4) EPC

(43) Date of publication:
**31.08.2022 Bulletin 2022/35**

(21) Application number: **20878911.5**

(22) Date of filing: **23.10.2020**

(51) International Patent Classification (IPC):
*C01G 25/00* (2006.01)      *H01M 10/056* (2010.01)
*H01M 10/0562* (2010.01)      *H01M 10/0565* (2010.01)

(52) Cooperative Patent Classification (CPC):
**C01G 25/00; H01M 10/056; H01M 10/0562;
H01M 10/0565;** Y02E 60/10

(86) International application number:
**PCT/JP2020/039971**

(87) International publication number:
**WO 2021/080005 (29.04.2021 Gazette 2021/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.10.2019 US 201962926015 P**

(71) Applicant: **NGK SPARK PLUG CO., LTD.
Mizuho-ku
Nagoya-shi
Aichi 467-8525 (JP)**

(72) Inventors:
• **RANDALL, Clive
University Park, Pennsylvania 16802 (US)**
• **GOMEZ, Enrique
University Park, Pennsylvania 16802 (US)**
• **SEO, Joo Hwan
University Park, Pennsylvania 16802 (US)**
• **IWASAKI, Masato
Nagoya-shi, Aichi 467-8525 (JP)**
• **NAKAYA, Hiroto
Nagoya-shi, Aichi 467-8525 (JP)**

(74) Representative: **Zimmermann & Partner
Patentanwälte mbB
Postfach 330 920
80069 München (DE)**

(54) **LITHIUM ION CONDUCTIVE SOLID ELECTROLYTE AND PRODUCTION METHOD FOR LITHIUM ION CONDUCTIVE SOLID ELECTROLYTE**

(57)    A lithium ion conductive solid electrolyte contains a lithium ion conductive powder having a garnet-type crystal structure including at least Li, La, Zr, and O, and a lithium ion conductive polymer. The lithium ion conductive solid electrolyte can maintain its shape without use of an additional polymer different from the lithium ion conductive polymer. The lithium ion conductive solid electrolyte exhibits an activation energy of 30 kJ/mol or less at 20°C to 80°C.

*FIG. 1*

EP 4 049 974 A1

**Description**

TECHNICAL FIELD

The technique disclosed in the present specification relates to a lithium ion conductive solid electrolyte.

BACKGROUND ART

In recent years, an increasing demand has arisen for high-performance batteries in association with, for example, the prevalence of electronic apparatuses (e.g., personal computers and cellular phones) and electric-powered automobiles, and the growing use of natural energy such as sunlight or wind power. In particular, expectations are placed on the utilization of a complete-solid lithium ion secondary battery in which all battery elements are formed of a solid (hereinafter the battery may be referred to as a "complete-solid battery"). The complete-solid battery is free from, for example, leakage of an organic electrolytic solution or flashing, and thus is safer than a conventional lithium ion secondary battery containing an organic electrolytic solution prepared by dissolution of a lithium salt in an organic solvent. Since the complete-solid battery can be provided with a simple casing, the battery achieves an increase in energy density per unit mass or unit volume.

One known lithium ion conductive solid electrolyte forming a solid electrolyte layer or an electrode of such a complete-solid battery contains, for example, a lithium ion conductive powder having a garnet-type crystal structure including at least Li (lithium), La (lanthanum), Zr (zirconium), and O (oxygen). One known lithium ion conductive powder contained in such a lithium ion conductive solid electrolyte is, for example, a powder of $Li_7La_3Zr_2O_{12}$ (hereinafter referred to as "LLZ") or a powder of a product prepared by elemental substitution of LLZ (e.g., a product prepared by substitution of LLZ with elemental Mg and Sr (hereinafter the product will be referred to as "LLZ-MgSr")) (see, for example, Patent Document 1). Hereinafter, such a lithium ion conductive powder will be referred to as "LLZ lithium ion conductive powder."

CITATION LIST

PATENT LITERATURE

Patent Literature 1: Japanese Patent Application Laid-Open (kokai) No. 2016-40767

SUMMARY OF INVENTION

TECHNICAL PROBLEM

A lithium ion conductive solid electrolyte forming a solid electrolyte layer or electrode of a complete-solid battery is required to have high lithium ion conductivity and excellent temperature stability of lithium ion conductivity for, for example, improving the power density of the battery or the temperature stability of power density. An LLZ lithium ion conductive powder exhibits relatively low lithium ion conductivity in the form of a molded product (compact) formed by press molding of the powder, since particles are in point contact with one another and thus the electric resistance between particles is high. The lithium ion conductivity can be increased by firing the LLZ lithium ion conductive powder at a high temperature. However, since high-temperature firing of the powder causes warpage or deformation, difficulty is encountered in producing a large-size battery. Also, high-temperature firing of the powder may cause reaction of the powder with, for example, an electrode active material to form a layer of high resistance, leading to a reduction in lithium ion conductivity. A binder may be used for preparing a molded product of the LLZ lithium ion conductive powder. However, since the binder does not have lithium ion conductivity, the resultant molded product exhibits low lithium ion conductivity. Meanwhile, the LLZ lithium ion conductive powder may be mixed with a lithium ion conductive polymer and a solvent to thereby prepare a slurry, and the slurry may be formed into a molded product through casting. However, the formation of the molded product through such a process requires a relatively large amount of the lithium ion conductive polymer. The lithium ion conductive polymer exhibits relatively low lithium ion conductivity at a low temperature, and undergoes a relatively large change in lithium ion conductivity in association with temperature change. Thus, the resultant molded product exhibits low lithium ion conductivity and low temperature stability of lithium ion conductivity.

Such a problem is not limited to a lithium ion conductive solid electrolyte used in a solid electrolyte layer or electrode of a complete-solid battery. Thus, such a problem is common with a lithium ion conductive solid electrolyte containing a lithium ion conductive powder having a garnet-type crystal structure including at least Li, La, Zr, and O.

The present specification discloses a technique capable of solving the aforementioned problems.

SOLUTION TO PROBLEM

The technique disclosed in the present specification can be implemented in, for example, the following modes.
(1) The present specification discloses a lithium ion conductive solid electrolyte which contains a lithium ion conductive powder having a garnet-type crystal structure including at least Li, La, Zr, and O, and a lithium ion conductive polymer, in which the lithium ion conductive solid electrolyte can maintain its shape without use of an additional polymer different from the lithium ion conductive polymer, and exhibits an activation energy of 30 kJ/mol or less at 20°C to 80°C. Since the lithium ion conductive solid electrolyte exhibits a relatively low activation energy at 20°C to 80°C, the solid electrolyte undergoes a small change in lithium ion conductivity in association with temperature change, and can achieve an improvement in temperature stability of lithium ion conductivity. Since the lithium ion conductive solid electrolyte can maintain its shape without use of an additional polymer different from the lithium ion conductive polymer, the solid electrolyte does not need to contain a binder. Thus, in the lithium ion conductive solid electrolyte, a reduction in lithium ion conductivity which would otherwise be caused by the presence of a binder having no lithium ion conductivity can be suppressed. Therefore, the lithium ion conductive solid electrolyte can achieve an improvement in lithium ion conductivity, as well as an improvement in temperature stability of lithium ion conductivity. Preferably, the lithium ion conductive solid electrolyte contains, as a polymer, only the lithium ion conductive polymer. When the lithium ion conductive solid electrolyte contains, as a polymer, only the lithium ion conductive polymer, the solid electrolyte exhibits the aforementioned effects more appropriately.

The activation energy of the lithium ion conductive solid electrolyte at 20°C to 80°C corresponds to the activation energy of lithium ion conduction, and is preferably 27 kJ/mol or less, more preferably 15 kJ/mol or less. Also, the activation energy is preferably 1 kJ/mol or more.
In order to provide the lithium ion conductive solid electrolyte with such an activation energy, the mixing ratio of the lithium ion conductive powder to the lithium ion conductive polymer is preferably adjusted to fall within a range of 80 vol% : 20 vol% to 99 vol% : 1 vol%, and the heating temperature in a heating and pressurization step of the below-described production process for the lithium ion conductive solid electrolyte is preferably 50°C to 200°C. Preferably, an aprotic polar solvent is used in the production process. As described below, the lithium ion conductive polymer is, for example, a mixture of a lithium salt and a polymer material.
(2) In the lithium ion conductive solid electrolyte, the amount by volume of the lithium ion conductive powder may be 80 vol% or more relative to 100 vol% of the total amount of the lithium ion conductive powder and the lithium ion conductive polymer. The lithium ion conductive solid electrolyte contains a relatively large amount by volume of the lithium ion conductive powder, which undergoes a small change in lithium ion conductivity in association with temperature change, as compared with the lithium ion conductive polymer. Thus, the lithium ion conductive solid electrolyte can effectively improve the temperature stability of lithium ion conductivity.
The aforementioned amount by volume of the lithium ion conductive powder is preferably 85 vol% or more, more preferably 90 vol% or more. Still more preferably, the amount by volume is 99 vol% or less.
(3) The present specification also discloses a method for producing a lithium ion conductive solid electrolyte containing a lithium ion conductive powder having a garnet-type crystal structure including at least Li, La, Zr, and O, the method including a slurry preparation step of preparing a slurry containing a lithium salt, a polymer, the lithium ion conductive powder, and at least one aprotic polar solvent; and a heating and pressurization step of heating the slurry under pressurization, thereby producing a lithium ion conductive solid electrolyte containing the lithium ion conductive powder and a lithium ion conductive polymer, in which the temperature of heating in the heating and pressurization step is higher than the boiling point of said at least one aprotic polar solvent and lower than the decomposition temperature of the polymer. According to the lithium ion conductive solid electrolyte production method, the slurry is prepared by use of an aprotic polar solvent (without use of water or alcohol), and the slurry is heated and pressurized, whereby the slurry can be solidified while the polymer is effectively dispersed in the slurry. Thus, a solid electrolyte containing a large amount of a lithium ion conductive powder having a garnet-type crystal structure including at least Li, La, Zr, and O can be produced by use of a small amount of the polymer without use of a binder and without firing at a high temperature of about 1,200°C or higher. The resultant solid electrolyte exhibits high lithium ion conductivity and excellent temperature stability of lithium ion conductivity. According to the lithium ion conductive solid electrolyte production method, thermal decomposition of the polymer can be prevented in the heating and pressurization step, thereby preventing a reduction in the lithium ion conductivity of the solid electrolyte caused by the thermal decomposition of the polymer. Also, the solvent can be prevented from remaining excessively in the solid electrolyte produced through the heating and pressurization step, thereby preventing a reduction in the density or lithium ion conductivity of the solid electrolyte caused by the excessive remaining of the solvent.
(4) In the lithium ion conductive solid electrolyte production method, the slurry may contain a plurality of aprotic polar solvents. According to the production method for a lithium ion conductive solid electrolyte, the solubility of the polymer in the slurry can be readily controlled by using a plurality of solvents, and thus the amount of the polymer can be reduced to thereby effectively improve the temperature stability of lithium ion conductivity of the solid electrolyte.

(5) In the lithium ion conductive solid electrolyte production method, the temperature of heating in the heating and pressurization step may be higher than the boiling point of at least one aprotic polar solvent of the plurality of aprotic polar solvents, and lower than the boiling point of at least one other aprotic polar solvent of the aprotic polar solvents. According to the production method for a lithium ion conductive solid electrolyte, at least one aprotic polar solvent of the aprotic polar solvents can be prevented from remaining excessively in the solid electrolyte produced through the heating and pressurization step, thereby preventing a reduction in the density or lithium ion conductivity of the solid electrolyte caused by the excessive remaining of the solvent. The solid electrolyte produced through the heating and pressurization step can be in the form of a gel polymer having high heat resistance by virtue of the presence of at least one other aprotic polar solvent of the aprotic polar solvents.

(6) In the lithium ion conductive solid electrolyte production method, the pressure of pressurization in the heating and pressurization step may be 100 MPa or more. According to the production method for a lithium ion conductive solid electrolyte, voids present at particle boundaries in the slurry can be effectively eliminated, thereby increasing the density of the solid electrolyte produced through the heating and pressurization step.

The pressure of pressurization in the heating and pressurization step is preferably 100 MPa to 500 MPa, more preferably 300 MPa to 500 MPa.

Notably, the techniques disclosed in the present specification can be implemented in various modes; for example, a lithium ion conductive solid electrolyte, a solid electrolyte layer or electrode containing the lithium ion conductive solid electrolyte, a power storage device including the solid electrolyte layer or the electrode, and a production method therefor.

BRIEF DESCRIPTION OF DRAWINGS

FIG. 1 is an explanatory view schematically showing a cross section of a complete-solid lithium ion secondary battery 102 according to an embodiment.
FIG. 2 is an explanatory view schematically showing a garnet-type crystal structure.
FIG. 3 is a flowchart showing an exemplary production method for a lithium ion conductive solid electrolyte 202 according to the embodiment.
FIG. 4 is an explanatory view showing the results of performance evaluation.
FIG. 5 is an explanatory view schematically showing the structure of a heating/pressurizing apparatus 20.
FIG. 6 is an explanatory view showing an Arrhenius plot prepared for sample S3.

DESCRIPTION OF EMBODIMENTS

A. Embodiment:

A-1. Structure of complete-solid battery 102:

(Entire structure)

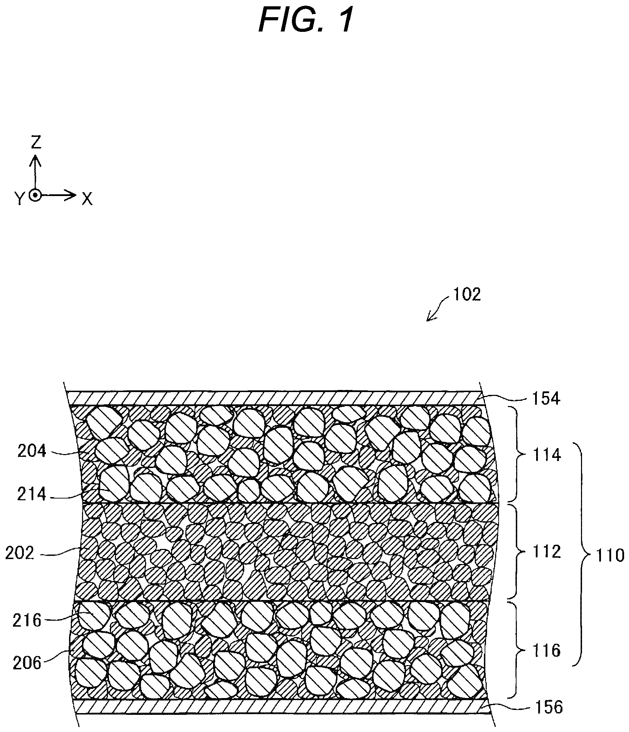

FIG. 1 is an explanatory view schematically showing a cross section of a complete-solid lithium ion secondary battery (hereinafter will be referred to as "complete-solid battery") 102 according to the present embodiment. FIG. 1 shows mutually orthogonal X-axis, Y-axis, and Z-axis for specifying respective directions. In the present specification, for the sake of convenience, the positive Z-axis direction is called the "upward direction," and the negative Z-axis direction is called the "downward direction."

The complete-solid battery 102 includes a battery body 110, a cathode-side collector member 154 disposed on one side (upper side) of the battery body 110, and an anode-side collector member 156 disposed on the other side (lower side) of the battery body 110. Each of the cathode-side collector member 154 and the anode-side collector member 156 is an electrically conductive member having an approximately flat-plate shape, and is formed of, for example, an electrically conductive metal material selected from among stainless steel, Ni (nickel), Ti (titanium), Fe (iron), Cu (copper), Al (aluminum), and alloys of these, or a carbon material. In the following description, the cathode-side collector member 154 and the anode-side collector member 156 may be collectively referred to as "collector members."

(Structure of battery body 110)

The battery body 110 is a lithium ion secondary battery body in which all battery elements are formed of a solid. As used herein, the phrase "all battery elements are formed of a solid" refers to the case where the skeletons of all battery elements are formed of a solid, but does not exclude the case where, for example, any of the skeletons is impregnated with a liquid. The battery body 110 includes a cathode 114, an anode 116, and a solid electrolyte layer 112 disposed between the cathode 114 and the anode 116. In the following description, the cathode 114 and the anode 116 may be collectively referred to as "electrodes."

(Structure of solid electrolyte layer 112)

The solid electrolyte layer 112 is a member having an approximately flat-plate shape and contains a lithium ion conductive solid electrolyte 202. More specifically, the solid electrolyte layer 112 of the present embodiment is a flat-plate member formed of the lithium ion conductive solid electrolyte 202.

(Structure of cathode 114)

The cathode 114 is a member having an approximately flat-plate shape and contains a cathode active material 214. The cathode active material 214 is, for example, S (sulfur), $TiS_2$, $LiCoO_2$ (hereinafter referred to as "LCO"), $LiMn_2O_4$, $LiFePO_4$, $Li(Co_{1/3}Ni_{1/3}Mn_{1/3})O_2$ (hereinafter referred to as "NCM"), or $LiNi_{0.8}Co_{0.15}Al_{0.05}O_2$. The cathode 114 contains a lithium ion conductive solid electrolyte 204 serving as a lithium-ion-conducting aid. The cathode 114 may further contain an electron-conducting aid (e.g., electrically conductive carbon, Ni (nickel), Pt (platinum), or Ag (silver)).

(Structure of anode 116)

The anode 116 is a member having an approximately flat-plate shape and contains an anode active material 216. The anode active material 216 is, for example, Li metal, Li-Al alloy, $Li_4Ti_5O_{12}$ (hereinafter referred to as "LTO"), carbon (graphite, natural graphite, artificial graphite, or core-shell graphite coated with low crystalline carbon), Si (silicon), or SiO. The anode 116 contains a lithium ion conductive solid electrolyte 206 serving as a lithium-ion-conducting aid. The anode 116 may further contain an electron-conducting aid (e.g., electrically conductive carbon, Ni, Pt, or Ag).

A-2. Structure of lithium ion conductive solid electrolyte:

Next will be described the structure of the lithium ion conductive solid electrolyte 202 forming the solid electrolyte layer 112. The lithium ion conductive solid electrolyte 204 contained in the cathode 114 and the lithium ion conductive solid electrolyte 206 contained in the anode 116 have the same structure as the lithium ion conductive solid electrolyte 202 contained in the solid electrolyte layer 112. Thus, description of the lithium ion conductive solid electrolytes 204 and 206 is omitted.

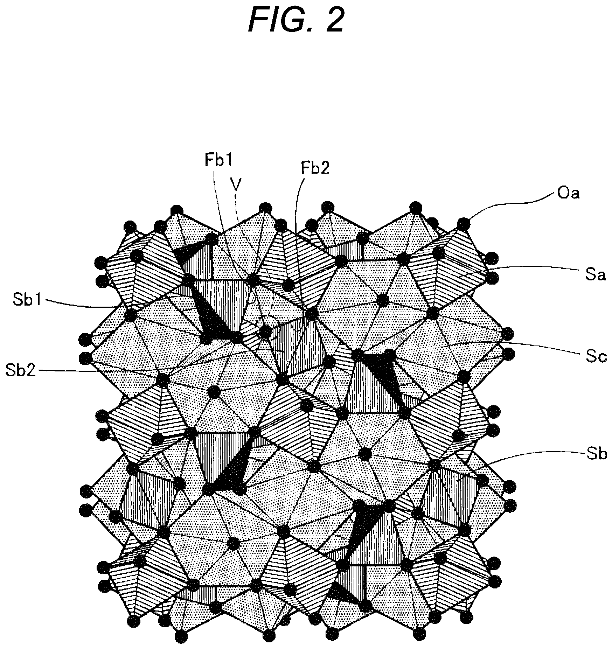

In the present embodiment, the lithium ion conductive solid electrolyte 202 forming the solid electrolyte layer 112 contains a lithium ion conductive powder. More specifically, the lithium ion conductive solid electrolyte 202 contains the aforementioned LLZ lithium ion conductive powder (i.e., lithium ion conductive powder having a garnet-type crystal structure including at least Li, La, Zr, and O, such as LLZ or LLZ-MgSr). As used herein, the term "garnet-type crystal structure" corresponds to a crystal structure represented by general formula $C_3A_2B_3O_{12}$. FIG. 2 is an explanatory view schematically showing the garnet-type crystal structure. As shown in FIG. 2, in the garnet-type crystal structure, a C site Sc is dodecahedrally coordinated with oxygen atoms Oa, an A site Sa is octahedrally coordinated with oxygen atoms Oa, and a B site Sb is tetrahedrally coordinated with oxygen atoms Oa. In the lithium ion conductive powder (lithium ion conductive solid electrolyte) having the garnet-type crystal structure, lithium can be present at a void V, which is octahedrally coordinated with oxygen atoms Oa in a common garnet-type crystal structure. The void V is sandwiched between, for example, B sites Sb1 and Sb2 shown in FIG. 2. Lithium present at the void V is octahedrally coordinated with oxygen atoms Oa forming an octahedron including a face Fb1 of a tetrahedron forming the B site Sb1 and a face Fb2 of a tetrahedron forming the B site Sb2. In the lithium ion conductive powder (lithium ion conductive solid electrolyte) having, for example, a garnet-type crystal structure with the composition $Li_7La_3Zr_2O_{12}$, the C site Sc is occupied by lanthanum, the A site Sa is occupied by zirconium, and the B site Sb and the void V are occupied by lithium. In order to determine that the lithium ion conductive powder has a garnet-type crystal structure including at least Li, La, Zr, and O, the lithium ion conductive powder can be analyzed by means of an X-ray diffractometer (XRD). Specifically, the lithium ion conductive powder is analyzed by means of an X-ray diffractometer, and the X-ray diffraction pattern of the powder is obtained. The X-ray diffraction pattern is compared with ICDD (International Center for Diffraction Data) card (01-080-4947) ($Li_7La_3Zr_2O_{12}$) corresponding to LLZ. When the diffraction angle and diffraction intensity ratio of the diffraction peak in the X-ray diffraction pattern are generally consistent with those in the ICDD card, the lithium ion conductive powder can be determined to have a garnet-type crystal structure including at least Li, La, Zr, and O. For example, in the case of each lithium ion conductive powder (LLZ lithium ion conductive powder) described below in "A-6. Preferred embodiment of LLZ lithium ion conductive powder," the diffraction angle and diffraction intensity ratio of the diffraction peak in the X-ray diffraction pattern obtained from the powder are generally consistent with those in the ICDD card corresponding to LLZ. Thus, the lithium ion conductive powder is determined to have a garnet-type crystal structure including at least Li, La, Zr, and O.

The lithium ion conductive solid electrolyte 202 of the present embodiment further contains a lithium ion conductive polymer. The lithium ion conductive solid electrolyte 202 can maintain its shape without use of an additional polymer different from the lithium ion conductive polymer. Thus, the lithium ion conductive solid electrolyte 202 does not contain an additional polymer different from the lithium ion conductive polymer (e.g., a polymer serving as a binder, such as polyvinylidene fluoride (PVDF)).

In order to determine that the lithium ion conductive solid electrolyte 202 does not contain an additional polymer different from the lithium ion conductive polymer, the molecular weight of the polymer and the functional groups forming the polymer can be analyzed through, for example, thermogravimetry and mass spectrometry (TG-MS), to thereby specify the polymer species contained in the lithium ion conductive solid electrolyte 202 for determining whether or not the solid electrolyte contains only one polymer species.

The lithium ion conductive polymer is a polymer having lithium ion conductivity, and is, for example, a mixture of a lithium salt and a polymer material. The polymer material used for forming the lithium ion conductive polymer is, for example, polyethylene oxide (hereinafter referred to as "PEO") or polypropylene carbonate (hereinafter referred to as "PPC"). The lithium salt used for forming the lithium ion conductive polymer is, for example, lithium bis(trifluoromethanesulfonyl)imide ($LiN(SO_2CF_3)_2$) (hereinafter referred to as "Li-TFSI") or lithium perchlorate ($LiClO_4$). The lithium ion conductive polymer used is, for example, a polymer composed of a mixture of PEO and Li-TFSI or a polymer composed of a mixture of PPC and $LiClO_4$.

As described above, the lithium ion conductive solid electrolyte 202 of the present embodiment contains the LLZ lithium ion conductive powder and the lithium ion conductive polymer. The amount by volume of the LLZ lithium ion conductive powder contained in the lithium ion conductive solid electrolyte 202 is 80 vol% or more (the total amount of the LLZ lithium ion conductive powder and the lithium ion conductive polymer is taken as 100 vol%). The amount by volume of the LLZ lithium ion conductive powder contained in the lithium ion conductive solid electrolyte 202 is more preferably 85 vol% or more, still more preferably 90 vol% or more.

The lithium ion conductive solid electrolyte 202 of the present embodiment exhibits an activation energy of 30 kJ/mol or less at 20°C to 80°C. As used herein, the term "activation energy" refers to the activation energy of lithium ion conduction. Since the activation energy of lithium ion conduction corresponds to a change in lithium ion conductivity in association with temperature change, a higher activation energy indicates a larger change in lithium ion conductivity in association with temperature change. The lithium ion conductive solid electrolyte 202 of the present embodiment exhibits a relatively low activation energy (i.e., 30 kJ/mol or less) at 20°C to 80°C. Thus, the lithium ion conductive solid electrolyte 202 undergoes a small change in lithium ion conductivity in association with temperature change; i.e., the solid electrolyte exhibits excellent temperature stability of lithium ion conductivity. The activation energy of the lithium ion conductive solid electrolyte 202 at 20°C to 80°C is more preferably 27 kJ/mol or less, still more preferably 15 kJ/mol or less.

A-3. Method for producing lithium ion conductive solid electrolyte 202:

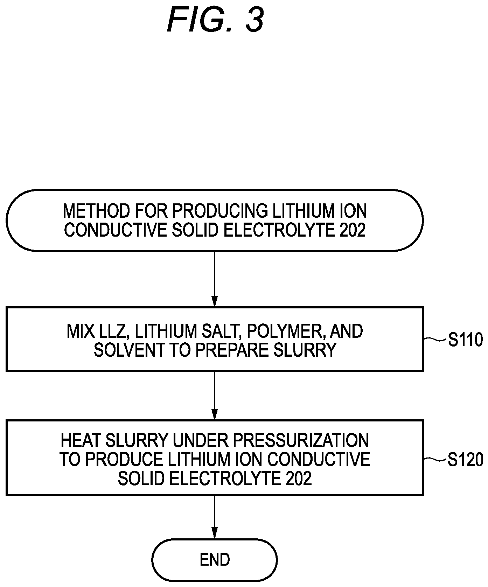

Next will be described an exemplary method for producing the lithium ion conductive solid electrolyte 202 of the present embodiment. FIG. 3 is a flowchart showing an exemplary method for producing the lithium ion conductive solid electrolyte 202 of the present embodiment.

Firstly, an LLZ lithium ion conductive powder is mixed with a lithium salt, a polymer, and a solvent, to thereby prepare a slurry containing these materials (S110). In the present embodiment, the solvent used for preparing the slurry is an aprotic polar solvent. Examples of the aprotic polar solvent include acetonitrile (hereinafter referred to as "ACN") and N,N-dimethylformamide (hereinafter referred to as "DMF"). The preparation of the slurry may involve the use of one aprotic polar solvent or a plurality of aprotic polar solvents. When a plurality of aprotic polar solvents are used for the preparation of the slurry, the solubility of the polymer in the slurry can be readily controlled, and thus the amount of the polymer can be reduced. As described below, this leads to an effective improvement in the temperature stability of lithium ion conductivity of the lithium ion conductive solid electrolyte 202 by reducing the amount of the polymer that undergoes a relatively large change in lithium ion conductivity in association with temperature change. Step S110 corresponds to the slurry preparation step appearing in CLAIMS.

Subsequently, the resultant slurry is heated under pressurization, to thereby produce the lithium ion conductive solid electrolyte 202 containing the LLZ lithium ion conductive powder and the lithium ion conductive polymer (S120). Through the heating and pressurization step S120, the aprotic polar solvent contained in the slurry is evaporated while the lithium ion conductive polymer is effectively dispersed in the slurry, to thereby produce the lithium ion conductive solid electrolyte 202, which is in the form of a solidified product produced through solidification of the slurry. In the heating and pressurization step S120, voids between particles are eliminated under pressurization, and thus the dense lithium ion conductive solid electrolyte 202 is produced. Since the solvent contained in the slurry is an aprotic polar solvent (i.e., neither water nor alcohol), the solvent can be prevented from reacting with the LLZ lithium ion conductive powder in the heating and pressurization step S120, thereby preventing a reduction in lithium ion conductivity caused by the reaction. Step S120 corresponds to the heating and pressurization step appearing in CLAIMS.

The temperature of heating in the heating and pressurization step S120 is higher than the boiling point of at least one aprotic polar solvent contained in the slurry. Thus, the solvent can be effectively evaporated in the heating and pressurization step S120, and the solvent can be prevented from remaining excessively in the lithium ion conductive solid electrolyte 202 produced through the heating and pressurization step S120, thereby preventing a reduction in the density or lithium ion conductivity of the lithium ion conductive solid electrolyte 202 caused by the excessive remaining of the solvent. The temperature of heating in the heating and pressurization step S120 is lower than the decomposition temperature of the polymer contained in the slurry. Thus, thermal decomposition of the polymer can be prevented in the heating and pressurization step S120, thereby preventing a reduction in the lithium ion conductivity of the lithium ion conductive solid electrolyte 202 caused by the thermal decomposition of the polymer.

When a plurality of aprotic polar solvents are contained in the slurry, the temperature of heating in the heating and pressurization step S120 is preferably higher than the boiling point of at least one aprotic polar solvent, and lower than the boiling point of at least one other aprotic polar solvent. In such a case, said at least one solvent can be prevented from remaining excessively in the lithium ion conductive solid electrolyte 202 produced through the heating and pressurization step S120, thereby preventing a reduction in the density or lithium ion conductivity of the lithium ion conductive solid electrolyte 202 caused by the excessive remaining of the solvent. The lithium ion conductive solid electrolyte 202 produced through the heating and pressurization step S120 can be in the form of a gel polymer having high heat resistance by virtue of the presence of said at least one other aprotic polar solvent.

The pressure of pressurization in the heating and pressurization step S120 is preferably 100 MPa or more. In such a case, voids present at particle boundaries in the slurry can be effectively eliminated, thereby effectively increasing the density of the lithium ion conductive solid electrolyte 202 produced through the heating and pressurization step S120. The pressure of pressurization in the heating and pressurization step S120 is more preferably 300 MPa or more, still more preferably 400 MPa or more. The pressure of pressurization in the heating and pressurization step S120 is preferably equal to or less than the upper limit of the pressurization capacity of production equipment (e.g., 500 MPa).

A-4. Method for producing complete-solid battery 102:

Next will be described an exemplary method for producing the complete-solid battery 102 of the present embodiment. Firstly, the solid electrolyte layer 112 is formed. Specifically, the lithium ion conductive solid electrolyte 202 is prepared through the aforementioned method, and the solid electrolyte layer 112 is formed from the lithium ion conductive solid electrolyte 202.

Separately, the cathode 114 and the anode 116 are formed. Specifically, a powder of the cathode active material 214, the lithium ion conductive solid electrolyte 204, and optionally an electron-conducting aid powder are mixed in predetermined proportions, and the resultant mixture is subjected to pressure molding at a predetermined pressure, or the mixture is mixed with a binder and then molded into a sheet, to thereby form the cathode 114. Meanwhile, a powder of the anode active material 216, the lithium ion conductive solid electrolyte 206, and optionally an electron-conducting aid powder are mixed together, and the resultant mixture is subjected to pressure molding at a predetermined pressure, or the mixture is mixed with a binder and then molded into a sheet, to thereby form the anode 116.

Subsequently, the cathode-side collector member 154, the cathode 114, the solid electrolyte layer 112, the anode 116, and the anode-side collector member 156 are stacked in this order, and then integrated together by pressing. The complete-solid battery 102 having the aforementioned structure is produced through the above-described process.

A-5. Effects of the present embodiment:

As described above, the lithium ion conductive solid electrolyte 202 of the present embodiment contains the lithium ion conductive powder having a garnet-type crystal structure including at least Li, La, Zr, and O, and the lithium ion conductive solid electrolyte 202 can maintain its shape without use of an additional polymer different from the lithium ion conductive polymer. The lithium ion conductive solid electrolyte 202 of the present embodiment exhibits an activation energy of 30 kJ/mol or less at 20°C to 80°C. Since the lithium ion conductive solid electrolyte 202 of the present embodiment exhibits a relatively low activation energy at 20°C to 80°C, the solid electrolyte undergoes a small change in lithium ion conductivity in association with temperature change, and can achieve an improvement in temperature stability of lithium ion conductivity. Since the lithium ion conductive solid electrolyte 202 of the present embodiment can maintain its shape without use of an additional polymer different from the lithium ion conductive polymer, the solid electrolyte does not need to contain a binder. Thus, the lithium ion conductive solid electrolyte 202 of the present embodiment can prevent a reduction in lithium ion conductivity caused by the presence of a binder having no lithium ion conductivity. Therefore, the lithium ion conductive solid electrolyte 202 of the present embodiment can achieve an improvement in lithium ion conductivity, as well as an improvement in temperature stability of lithium ion conductivity.

In the lithium ion conductive solid electrolyte 202 of the present embodiment, the amount by volume of the LLZ lithium ion conductive powder is 80 vol% or more. The lithium ion conductive solid electrolyte 202 of the present embodiment contains a relatively large amount by volume of the LLZ lithium ion conductive powder, which undergoes a small change in lithium ion conductivity in association with temperature change, as compared with the lithium ion conductive polymer. Thus, the lithium ion conductive solid electrolyte 202 can effectively improve the temperature stability of lithium ion conductivity.

The method for producing the lithium ion conductive solid electrolyte 202 of the present embodiment includes the slurry preparation step of preparing a slurry containing a lithium salt, a polymer, the LLZ lithium ion conductive powder, and at least one aprotic polar solvent; and the heating and pressurization step of heating the slurry under pressurization, thereby producing the lithium ion conductive solid electrolyte 202 containing the LLZ lithium ion conductive powder and the lithium ion conductive polymer, in which the temperature of heating in the heating and pressurization step is higher than the boiling point of said at least one aprotic polar solvent and lower than the decomposition temperature of the polymer. According to the method for producing the lithium ion conductive solid electrolyte 202 of the present embodiment, the slurry is prepared by use of an aprotic polar solvent (without use of water or alcohol), and the slurry is heated and pressurized, whereby the slurry can be solidified while the polymer is effectively dispersed in the slurry. Thus, the solid electrolyte containing a large amount of the lithium ion conductive powder having a garnet-type crystal structure including at least Li, La, Zr, and O can be produced by use of a small amount of the polymer without use of a binder and without firing at a high temperature of about 1,200°C or higher. The resultant solid electrolyte exhibits high lithium ion conductivity and excellent temperature stability of lithium ion conductivity. According to the method for producing the lithium ion conductive solid electrolyte 202 of the present embodiment, thermal decomposition of the polymer can be prevented in the heating and pressurization step, thereby preventing a reduction in the lithium ion conductivity of the solid electrolyte caused by the thermal decomposition of the polymer. Also, the solvent can be prevented from remaining excessively in the solid electrolyte produced through the heating and pressurization step, thereby preventing a reduction in the density or lithium ion conductivity of the solid electrolyte caused by the excessive remaining of the solvent.

In the method for producing the lithium ion conductive solid electrolyte 202 of the present embodiment, the slurry preferably contains a plurality of aprotic polar solvents. In such a case, the solubility of the polymer in the slurry can be readily controlled by using a plurality of solvents, and thus the amount of the polymer can be reduced to thereby effectively improve the temperature stability of lithium ion conductivity of the solid electrolyte.

In the method for producing the lithium ion conductive solid electrolyte 202 of the present embodiment, when the aforementioned slurry contains a plurality of aprotic polar solvents, the temperature of heating in the heating and pressurization step is preferably higher than the boiling point of at least one aprotic polar solvent and lower than the boiling point of at least one other aprotic polar solvent. In such a case, said at least one aprotic polar solvent can be prevented from remaining excessively in the solid electrolyte produced through the heating and pressurization step, thereby preventing a reduction in the density or lithium ion conductivity of the solid electrolyte caused by the excessive remaining of the solvent. The solid electrolyte produced through the heating and pressurization step can be in the form of a gel polymer having high heat resistance by virtue of the presence of said at least one other aprotic polar solvent.

In the method for producing the lithium ion conductive solid electrolyte 202 of the present embodiment, the pressure of pressurization in the heating and pressurization step is preferably 100 MPa or more. In such a case, voids present at particle boundaries in the slurry can be effectively eliminated, thereby increasing the density of the solid electrolyte produced through the heating and pressurization step.

A-6. Performance evaluation:

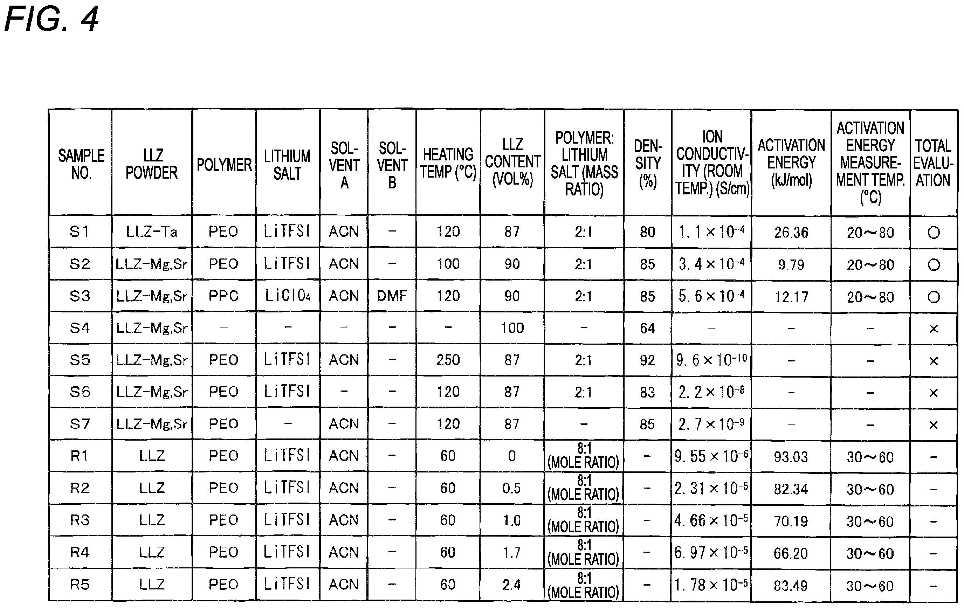

Lithium ion conductive solid electrolyte samples were evaluated for its performance. FIG. 4 is an explanatory view showing the results of performance evaluation.

As shown in FIG. 4, seven lithium ion conductive solid electrolyte samples (S1 to S7) were used for performance evaluation. For reference, FIG. 4 shows Referential Examples R1 to R5 (omitted from the evaluation), which are described in the literature (Fei Chen and nine others, "Solid polymer electrolytes incorporating cubic Li7La3Zr2O12 for all-solid-state lithium rechargeable batteries," Electrochimica Acta, Elsevier, December 20, 2017, vol. 258, p. 1106-1114).

A-6-1. Sample preparation method:

Samples were prepared through the method described below. In Sample S1, the LLZ lithium ion conductive powder used was a powder of a product prepared by substitution of LLZ with elemental Ta (hereinafter referred to as "LLZ-Ta"). The LLZ-Ta powder was purchased from MSE Supplies.

In samples S2 to S7, the LLZ lithium ion conductive powder used was a powder of a product prepared by substitution of LLZ with elemental Mg and Sr (LLZ-Mg, Sr). The LLZ-Mg, Sr powder was prepared as follows. Firstly, $Li_2CO_3$, $MgO$, $La(OH)_3$, $SrCO_3$, and $ZrO_2$ were weighed so as to achieve a composition of $Li_{6.95}Mg_{0.15}La_{2.75}Sr_{0.25}Zr_{2.0}O_{12}$ (LLZ-Mg·Sr). In consideration of volatilization of Li during firing, $Li_2CO_3$ was further added so that the amount of elemental Li was in excess by about 15 mol%. These raw materials were added to a nylon pot together with zirconia balls, and the resultant mixture was pulverized by means of a ball mill in an organic solvent for 15 hours. Thereafter, the resultant slurry was dried and then subjected to reduction firing on an MgO plate at 1,200°C for 10 hours, to thereby prepare an LLZ-Mg·Sr powder. The resultant powder was wet-pulverized by means of a planetary ball mill in an air-unexposed environment, to thereby adjust the particle size (D90) of the LLZ-Mg, Sr powder to 3.2 $\mu$m.

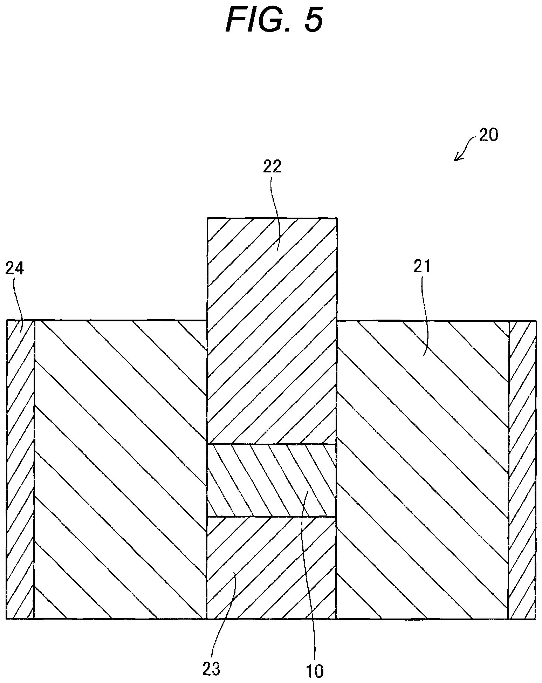

Sample S1 was prepared as follows. A mixture of a polymer and a lithium salt (lithium ion conductive polymer) was added to the LLZ-Ta powder. The mixing ratio of the LLZ-Ta powder to the lithium ion conductive polymer was adjusted to 87 vol% : 13 vol%. This mixing ratio corresponds to the amount by volume of the LLZ-Ta powder (i.e., lithium ion conductive powder) relative to the total amount (taken as 100 vol%) of the lithium ion conductive powder and the lithium ion conductive polymer. The polymer used was PEO (polyethylene oxide), the lithium salt used was Li-TFSI (lithium bis(trifluoromethanesulfonyl)imide), and they were mixed in mass proportions of 2 : 1. To the mixture of the LLZ-Ta powder and the lithium ion conductive polymer was added ACN (acetonitrile) serving as an aprotic polar solvent in an additional amount of 10 wt%, and they were mixed by means of a mortar, to thereby prepare a slurry. The slurry was solidified by means of a heating/pressurizing apparatus 20 shown in FIG. 5. As shown in FIG. 5, the heating/pressurizing apparatus 20 includes a cylindrical mold 21 having an interior diameter of 13.0 mm, a lower punch 23 and an upper punch 22 which are inserted in the interior of the mold 21 and which face each other via a pressurizing target 10 (e.g., a slurry) sandwiched therebetween, and a cover heater 24 disposed to cover the outer periphery of the mold 21. The aforementioned slurry (0.5 g) was placed in the interior of the mold 21. While the mold 21 was heated with the cover heater 24 set at 120°C, the slurry was uniaxially pressed at 400 MPa by means of the press (the lower punch 23 and the upper punch 22) for 120 minutes, to thereby prepare a disk-shaped solidified product (lithium ion conductive solid electrolyte sample) having a diameter of 13.0 mm and a thickness of about 1.0 mm. ACN (i.e., aprotic polar solvent) has a boiling point of 82°C, and PEO (i.e., polymer) has a decomposition temperature of about 200°C. Thus, the heating temperature (120°C) in the heating and pressurization step for the preparation of sample S1 is higher than the boiling point of the aprotic polar solvent and lower than the decomposition temperature of the polymer.

The preparation method for sample S2 differs from that for sample S1 in terms of the type of the LLZ lithium ion conductive powder, the mixing ratio of the LLZ lithium ion conductive powder to the lithium ion conductive polymer, and the heating temperature in the heating and pressurization step. Specifically, a mixture of a polymer and a lithium salt (lithium ion conductive polymer) was added to the LLZ-Mg, Sr powder. The mixing ratio of the LLZ-Mg, Sr powder to the lithium ion conductive polymer was adjusted to 90 vol% : 10 vol%. The polymer used was PEO, the lithium salt used was Li-TFSI, and they were mixed in mass proportions of 2 : 1. To the mixture of the LLZ-Mg, Sr powder and the lithium ion conductive polymer was added ACN serving as an aprotic polar solvent in an additional amount of 10 wt%, and they were mixed by means of a mortar, to thereby prepare a slurry. The slurry (0.5 g) was placed in the interior of the mold 21. While the mold 21 was heated with the cover heater 24 set at 100°C, the slurry was uniaxially pressed at 400 MPa by means of the press (the lower punch 23 and the upper punch 22) for 120 minutes, to thereby prepare a disk-shaped solidified product (lithium ion conductive solid electrolyte sample) having a diameter of 13.0 mm and a thickness of about 1.0 mm. ACN (i.e., aprotic polar solvent) has a boiling point of 82°C, and PEO (i.e., polymer) has a decomposition temperature of about 200°C. Thus, the heating temperature (100°C) in the heating and pressurization step for the preparation of sample S2 is higher than the boiling point of the aprotic polar solvent and lower than the decomposition temperature of the polymer.

The preparation method for sample S3 differs from that for sample S2 in terms of the types of a polymer and a lithium salt, the type of a solvent, and the heating temperature in the heating and pressurization step. Specifically, a mixture of a polymer and a lithium salt (lithium ion conductive polymer) was added to the LLZ-Mg, Sr powder. The mixing ratio of the LLZ-Mg, Sr powder to the lithium ion conductive polymer was adjusted to 90 vol% : 10 vol%. The polymer used was PPC (polypropylene carbonate), the lithium salt used was $LiClO_4$ (lithium perchlorate), and they were mixed in mass proportions of 2 : 1. To the mixture of the LLZ-Mg, Sr powder and the lithium ion conductive polymer were added ACN and DMF (N,N-dimethylformamide) serving as aprotic polar solvents in additional amounts of 10 wt% and 0.15 wt%, respectively, and they were mixed by means of a mortar, to thereby prepare a slurry. The slurry (0.5 g) was placed in the interior of the mold 21. While the mold 21 was heated with the cover heater 24 set at 120°C, the slurry was uniaxially pressed at 400 MPa by means of the press (the lower punch 23 and the upper punch 22) for 120 minutes, to thereby prepare a disk-shaped solidified product (lithium ion conductive solid electrolyte sample) having a diameter of 13.0 mm and a thickness of about 1.0 mm. ACN (i.e., aprotic polar solvent) has a boiling point of 82°C, DMF (i.e., aprotic polar solvent) has a boiling point of 153°C, and PPC (i.e., polymer) has a decomposition temperature of about 200°C. Thus, the heating temperature (120°C) in the heating and pressurization step for the preparation of sample S3 is higher than the boiling point of one aprotic polar solvent (ACN), lower than the boiling point of the other aprotic polar solvent (DMF), and lower than the decomposition temperature of the polymer.

Sample S4 was prepared as follows. The LLZ-Mg, Sr powder (0.5 g) was placed in the interior of the mold 21, and the powder was uniaxially pressed at 400 MPa by means of the press (the lower punch 23 and the upper punch 22) at ambient temperature for 120 minutes, to thereby prepare a disk-shaped solidified product (lithium ion conductive solid electrolyte sample) having a diameter of 13.0 mm and a thickness of about 1.0 mm.

The preparation method for sample S5 differs from that for sample S2 in terms of the mixing ratio of the LLZ lithium ion conductive powder to the lithium ion conductive polymer, and the heating temperature in the heating and pressurization step. Specifically, a mixture of a polymer and a lithium salt (lithium ion conductive polymer) was added to the LLZ-Mg, Sr powder. The mixing ratio of the LLZ-Mg, Sr powder to the lithium ion conductive polymer was adjusted to 87 vol% : 13 vol%. The polymer used was PEO, the lithium salt used was Li-TFSI, and they were mixed in mass proportions of 2 : 1. To the mixture of the LLZ-Mg, Sr powder and the lithium ion conductive polymer was added ACN serving as an aprotic polar solvent in an amount of 10 wt%, and they were mixed by means of a mortar, to thereby prepare a slurry. The slurry (0.5 g) was placed in the interior of the mold 21. While the mold 21 was heated with the cover heater 24 set at 250°C, the slurry was uniaxially pressed at 400 MPa by means of the press (the lower punch 23 and the upper punch 22) for 120 minutes, to thereby prepare a disk-shaped solidified product (lithium ion conductive solid electrolyte sample) having a diameter of 13.0 mm and a thickness of about 1.0 mm. ACN (i.e., aprotic polar solvent) has a boiling point of 82°C, and PEO (i.e., polymer) has a decomposition temperature of about 200°C. Thus, the heating temperature (250°C) in the heating and pressurization step for the preparation of sample S5 is higher than the boiling point of the aprotic polar solvent and higher than the decomposition temperature of the polymer.

The preparation method for sample S6 differs from that for sample S2 in terms of no addition of a solvent, the mixing ratio of the LLZ lithium ion conductive powder to the lithium ion conductive polymer, and the heating temperature in the heating and pressurization step. Specifically, a mixture of a polymer and a lithium salt (lithium ion conductive polymer) was added to the LLZ-Mg, Sr powder. The mixing ratio of the LLZ-Mg, Sr powder to the lithium ion conductive polymer was adjusted to 87 vol% : 13 vol%. The polymer used was PEO, the lithium salt used was Li-TFSI, and they were mixed in mass proportions of 2 : 1. Thereafter, without addition of a solvent, the mixture of the LLZ-Mg, Sr powder and the lithium ion conductive polymer (0.5 g) was placed in the interior of the mold 21. While the mold 21 was heated with the cover heater 24 set at 120°C, the mixture was uniaxially pressed at 400 MPa by means of the press (the lower punch 23 and the upper punch 22) for 120 minutes, to thereby prepare a disk-shaped solidified product (lithium ion conductive solid electrolyte sample) having a diameter of 13.0 mm and a thickness of about 1.0 mm. PEO (i.e., polymer) has a decomposition temperature of about 200°C. Thus, the heating temperature (120°C) in the heating and pressurization step for the preparation of sample S6 is lower than the decomposition temperature of the polymer.

The preparation method for sample S7 differs from that for sample S2 in terms of no addition of a lithium salt, the mixing ratio of the LLZ lithium ion conductive powder to the lithium ion conductive polymer, and the heating temperature in the heating and pressurization step. Specifically, a polymer was added to the LLZ-Mg, Sr powder. In this case, a lithium salt was not added to the LLZ-Mg, Sr powder. The mixing ratio of the LLZ-Mg, Sr powder to the polymer was adjusted to 87 vol% : 13 vol%. The polymer used was PEO. To the mixture of the LLZ-Mg, Sr powder and the polymer was added ACN serving as an aprotic polar solvent in an amount of 10 wt%, and they were mixed by means of a mortar, to thereby prepare a slurry. The slurry (0.5 g) was placed in the interior of the mold 21. While the mold 21 was heated with the cover heater 24 set at 120°C, the slurry was uniaxially pressed at 400 MPa by means of the press (the lower punch 23 and the upper punch 22) for 120 minutes, to thereby prepare a disk-shaped solidified product (lithium ion conductive solid electrolyte sample) having a diameter of 13.0 mm and a thickness of about 1.0 mm. ACN (i.e., aprotic polar solvent) has a boiling point of 82°C, and PEO (i.e., polymer) has a decomposition temperature of about 200°C. Thus, the heating temperature (120°C) in the heating and pressurization step for the preparation of sample S7 is higher than the boiling point of the aprotic polar solvent and lower than the decomposition temperature of the polymer.

A-6-2. Evaluation method:

Each sample was evaluated for density, lithium ion conductivity, and activation energy. In evaluation of the density, the dimensions and weight of each sample were measured, and the density of the sample was calculated from the measured values. A sample having a density of 80% or more was evaluated as "pass."

The samples that passed the density evaluation (samples S1 to S3 and S5 to S7) were evaluated for lithium ion conductivity. Specifically, the lithium ion conductivity of each sample was measured through the alternating current impedance method at room temperature (25°C), and a sample exhibiting a lithium ion conductivity of $1 \times 10^{-4}$ S/cm or

more was evaluated as "pass." For measurement of the lithium ion conductivity through the alternating current impedance method, carbon-coated aluminum foils (serving as collector electrodes) were pressure-bonded to the upper and lower surfaces of a pellet-like solidified product (sample) having a diameter of 13.0 mm and a thickness of about 1.0 mm, and the measurement was performed by means of an impedance analyzer (Solartron Analytical, Modulab XM MTS, manufactured by AMETEK) at an amplitude of 10 mV and a frequency of 0. 1 Hz to 1 MHz. ANyquist plot was prepared from the measured values, and the lithium ion conductivity of each solidified product (each sample) was calculated through equivalent circuit analysis.

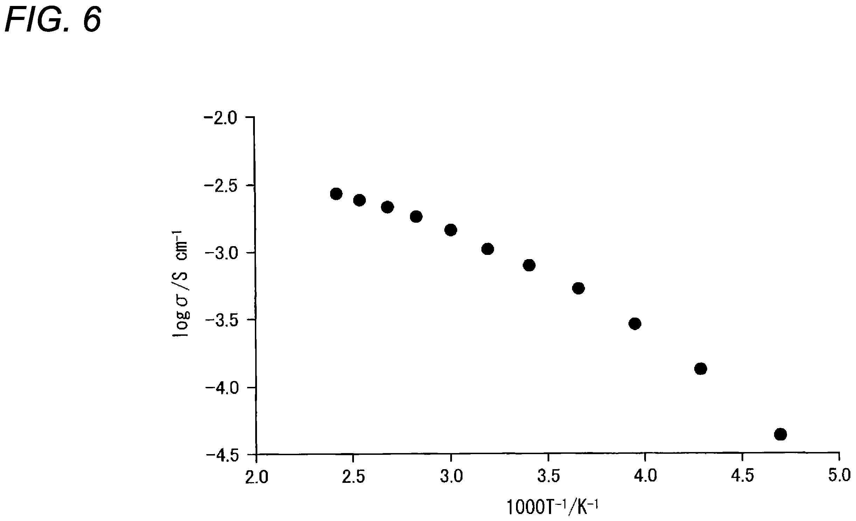

The samples that passed the lithium ion conductivity evaluation (samples S1 to S3) were evaluated for activation energy. Specifically, the lithium ion conductivity of each sample was measured through the alternating current impedance method at 20°C to 80°C, and an Arrhenius plot was prepared from the results of measurement. The activation energy of the sample was calculated from the Arrhenius plot, and a sample exhibiting an activation energy of 30 kJ/mol or less was evaluated as "pass." FIG. 6 is an explanatory view showing an Arrhenius plot prepared for sample S3. For preparation of the Arrhenius plot of a target solidified product (sample), the solidified product was placed in a thermostatic bath, and the lithium ion conductivity of the solidified product was measured through the aforementioned alternating current impedance method at different setting temperatures. Before each measurement, the temperature of the thermostatic bath was maintained at the corresponding setting temperature for 20 minutes so that the temperature of the solidified product was made uniform. The lithium ion conductivities of the solidified product measured at different setting temperatures were used to prepare an Arrhenius plot shown in FIG. 6, in which the horizontal axis corresponds to values obtained by multiplying 1,000 by the reciprocals of the measurement temperatures, and the vertical axis corresponds to logarithms of the lithium ion conductivities. The slope of an approximate straight line was determined from the resultant Arrhenius plot, and the activation energy was calculated by use of the following Arrhenius equation (1).

$$\log\sigma = \log A + (1/2.303) \times (-E/RT) \cdots (1)$$

σ: lithium ion conductivity (S/cm)
A: temperature-independent constant
E: activation energy (kJ)
R: gas constant (= 8.314 kJ/mol)
T: absolute temperature (K)

The samples that passed all the evaluations of density, lithium ion conductivity, and activation energy were evaluated as "totally good" (shown by "O" in FIG. 4).

A-6-3. Results of evaluation:

In the evaluation of density, samples S1 to S3 and S5 to S7 exhibited a density of 80% or more and were evaluated as "pass," whereas sample S4 exhibited a density of less than 80% and was evaluated as "fail." As described above, sample S4 was prepared without use of a lithium salt, a polymer, and a solvent; i.e., sample S4 was prepared through pressing of the LLZ-Mg, Sr powder at ambient temperature. The LLZ lithium ion conductive powder is harder than another oxide-based lithium ion conductor or a non-oxide-based lithium ion conductor (e.g., a sulfide-based lithium ion conductor). Thus, the pressing of the powder at ambient temperature conceivably failed to achieve high density.

In the evaluation of lithium ion conductivity, samples S1 to S3 exhibited a lithium ion conductivity of $1 \times 10^{-4}$ S/cm or more and were evaluated as "pass," whereas samples S5 to S7 exhibited a lithium ion conductivity of less than $1 \times 10^{-4}$ S/cm and were evaluated as "fail." In the preparation of sample S5, the heating temperature was 250°C, which is higher than the decomposition temperature of the polymer. Thus, the lithium ion conductive polymer is conceivably thermally decomposed in the heating and pressurization step, and the thermal decomposition conceivably causes a reduction in lithium ion conductivity. In the preparation of sample S6, no solvent was used. This conceivably causes insufficient dispersion of the lithium ion conductive polymer, resulting in a reduction in lithium ion conductivity. In the preparation of sample S7, no lithium salt was added, and thus the polymer was not provided with lithium ion conductivity. This conceivably causes a reduction in the lithium ion conductivity of the sample.

In the evaluation of activation energy, samples S1 to S3 exhibited an activation energy of 30 kJ/mol or less and were evaluated as "pass." The results are conceivably attributed to that each of these samples contains a relatively small amount of the lithium ion conductive polymer (in other words, a relatively large amount of the LLZ lithium ion conductive powder). The lithium ion conductive polymer exhibits a high activation energy (in other words, a large change in ion conductivity in association with temperature change) as compared with the LLZ lithium ion conductive powder. A relatively low activation energy of each of these samples is conceivably attributed to a relatively small amount of the lithium ion conductive polymer contained in the sample. Thus, each of these samples undergoes a small change in lithium ion conductivity in association with temperature change; i.e., the sample exhibits excellent temperature stability of lithium ion conductivity.

In particular, sample S3 exhibited very favorable evaluation results; specifically, a very high lithium ion conductivity of $5.6 \times 10^{-4}$ S/cm and a very low activation energy of 12.17 kJ/mol. In the preparation of sample S3, a plurality of aprotic polar solvents were used, and the solubility of the polymer in the slurry was readily controlled. Thus, sample S3 was prepared in the form of a dense solidified product even when the amount of the polymer was reduced. This conceivably achieves high lithium ion conductivity and low activation energy of sample S3.

The above-described results of performance evaluation indicate that a solid electrolyte exhibiting high lithium ion conductivity and excellent temperature stability of lithium ion conductivity can be produced through the method for producing a lithium ion conductive solid electrolyte containing an LLZ lithium ion conductive powder, the method including a slurry preparation step of preparing a slurry containing a lithium salt, a polymer, the LLZ lithium ion conductive powder, and at least one aprotic polar solvent, and a heating and pressurization step of heating the slurry under pressurization, thereby producing a lithium ion conductive solid electrolyte containing the LLZ lithium ion conductive powder and a lithium ion conductive polymer, in which the temperature of heating in the heating and pressurization step is higher than the boiling point of said at least one aprotic polar solvent and lower than the decomposition temperature of the polymer.

The above-described results of performance evaluation also indicate that the pressure of pressurization in the heating and pressurization step is preferably 100 MPa or more in the method for producing a lithium ion conductive solid electrolyte containing an LLZ lithium ion conductive powder.

The above-described results of performance evaluation also indicate that the slurry preferably contains a plurality of aprotic polar solvents, and the temperature of heating in the heating and pressurization step is preferably higher than the boiling point of at least one aprotic polar solvent and lower than the boiling point of at least one other aprotic polar solvent in the method for producing a lithium ion conductive solid electrolyte containing an LLZ lithium ion conductive powder.

Referential Examples R1 to R5 described in the aforementioned literature each correspond to a lithium ion conductive solid electrolyte prepared through the following procedure: LLZ powder (0, 0.5, 1.0, 1.7, or 2.4 vol%, respectively) is mixed with a polymer (100, 99.5, 99.0, 98.3, or 97.6 vol%, respectively) composed of a mixture of PEO (polyethylene oxide) and Li-TFSI (lithium bis(trifluoromethanesulfonyl)imide) (8 : 1 by mole); the resultant mixture is dissolved in ACN (acetonitrile) to thereby prepare a slurry; the slurry is formed into a sheet through casting; and the resultant sheet is dried under vacuum at 60°C for 24 hours. In these Referential Examples, since the amount by volume of the LLZ powder is very small, lithium ion conductivity is low, and activation energy is very high. Thus, the lithium ion conductive solid electrolytes of these Referential Examples exhibit low lithium ion conductivity and low temperature stability of lithium ion conductivity.

A-7. Preferred embodiment of LLZ lithium ion conductive powder:

As described above, the lithium ion conductive solid electrolyte of the present embodiment contains an LLZ lithium ion conductive powder (i.e., lithium ion conductive powder having a garnet-type crystal structure including at least Li, La, Zr, and O). The LLZ lithium ion conductive powder preferably contains at least one element selected from the group consisting of Mg, Al, Si, Ca (calcium), Ti, V (vanadium), Ga (gallium), Sr, Y (yttrium), Nb (niobium), Sn (tin), Sb (antimony), Ba (barium), Hf (hafnium), Ta (tantalum), W (tungsten), Bi (bismuth), and lanthanoids. The LLZ lithium ion conductive powder having such a composition exhibits good lithium ion conductivity.

Examples of the LLZ lithium ion conductor having a garnet-type crystal structure are as follows.

$$Li_6La_3Zr_{1.5}W_{0.5}O_{12}$$

$$Li_{6.15}La_3Zr_{1.75}Ta_{0.25}Al_{0.2}O_{12}$$

$$Li_{6.15}La_3Zr_{1.75}Ta_{0.25}Ga_{0.2}O_{12}$$

$$Li_{6.25}La_3Zr_2Ga_{0.25}O_{12}$$

$$Li_{6.4}La_3Zr_{1.4}Ta_{0.6}O_{12}$$

$$Li_{6.5}La_3Zr_{1.75}Te_{0.25}O_{12}$$

$$Li_{6.75}La_3Zr_{1.75}Nb_{0.25}O_{12}$$

$$Li_{6.9}La_3Zr_{1.675}Ta_{0.289}Bi_{0.036}O_{12}$$

$$Li_{6.46}Ga_{0.23}La_3Zr_{1.85}Y_{0.15}O_{12}$$

$$Li_{6.8}La_{2.95}Ca_{0.05}Zr_{1.75}Nb_{0.25}O_{12}$$

$$Li_{7.05}La_{3.00}Zr_{1.95}Gd_{0.05}O_{12}$$

Preferably, the LLZ lithium ion conductive powder having a garnet-type crystal structure contains at least one of Mg and element A (in which A represents at least one element selected from the group consisting of Ca, Sr, and Ba), in which these elements satisfy the following mole ratio conditions (1) to (3). Mg and element A are present in relatively large amounts in the earth (reserves) and inexpensive. Thus, when at least one of Mg and element A is used as a substitution element for the LLZ lithium ion conductive powder, the LLZ lithium ion conductive powder is expected to be reliably supplied and produced at low cost.

(1)

$$1.33 \leq Li/(La + A) \leq 3;$$

(2)

$$0 \leq Mg/(La + A) \leq 0.5; \text{ and}$$

(3)

$$0 \leq A/(La + A) \leq 0.67.$$

More preferably, the LLZ lithium ion conductive powder contains both Mg and element A, in which these elements satisfy the following mole ratio conditions (4) to (6):

(4)

$$2.0 \leq Li/(La + A) \leq 2.5;$$

(5)

$$0.01 \leq Mg/(La + A) \leq 0.14; \text{ and}$$

(6)

$$0.04 \leq A/(La + A) \leq 0.17.$$

In other words, the LLZ lithium ion conductive powder preferably satisfies any of the following (a) to (c), more preferably (c), still more preferably (d).

(a) The LLZ lithium ion conductive powder contains Mg, in which the amounts of the elements satisfy the mole ratio conditions: $1.33 \leq Li/La \leq 3$ and $0 \leq Mg/La \leq 0.5$.
(b) The LLZ lithium ion conductive powder contains element A, in which the amounts of the elements satisfy the mole ratio conditions: $1.33 \leq Li/(La + A) \leq 3$ and $0 \leq A/(La + A) \leq 0.67$.
(c) The LLZ lithium ion conductive powder contains Mg and element A, in which the amounts of the elements satisfy the mole ratio conditions: $1.33 \leq Li/(La + A) \leq 3$, $0 \leq Mg/(La + A) \leq 0.5$, and $0 \leq A/(La + A) \leq 0.67$.
(d) The LLZ lithium ion conductive powder contains Mg and element A, in which the amounts of the elements satisfy the mole ratio conditions: $2.0 \leq Li/(La + A) \leq 2.5$, $0.01 \leq Mg/(La + A) \leq 0.14$, and $0.04 \leq A/(La + A) \leq 0.17$.

When the LLZ lithium ion conductive powder satisfies the aforementioned (a); i.e., when the LLZ lithium ion conductive powder contains Li, La, Zr, and Mg so as to satisfy the aforementioned mole ratio conditions: (1) and (2), the LLZ lithium ion conductive powder exhibits good lithium ion conductivity. Although the mechanism therefor has not clearly been elucidated, a conceivable reason is as follows. In the case where, for example, the LLZ lithium ion conductive powder contains Mg, the ionic radius of Li is almost equivalent to that of Mg, and thus Mg is readily placed in Li sites where Li is originally present in the LLZ crystal phases. When Mg replaces Li, pores are generated at some Li sites in the crystal structure, due to the difference in amount of electric charge between Li and Mg, thereby conceivably enhancing the mobility of Li ions. As a result, lithium ion conductivity may be improved. In the LLZ lithium ion conductive powder, when the mole ratio of Li to the sum of La and element A is smaller than 1.33 or greater than 3, a metal oxide other than the lithium ion conductive powder having a garnet-type crystal structure is readily formed. An increase in the metal oxide content leads to a relative decrease in the amount of the lithium ion conductive powder having a garnet-type crystal structure. Since the metal oxide has low lithium ion conductivity, the lithium ion conductivity of the LLZ lithium ion conductive powder is reduced. An increase in the Mg content of the LLZ lithium ion conductive powder leads to placement of Mg in Li sites and generation of pores at some Li sites, resulting in an improvement in lithium ion conductivity. When the mole ratio of Mg to the sum of La and element A is in excess of 0.5, an Mg-containing metal oxide is readily formed. An increase in the Mg-containing metal oxide content leads to a relative decrease in the amount of the lithium ion conductive powder having a garnet-type crystal structure. The Mg-containing metal oxide has low lithium ion conductivity. Thus, when the mole ratio of Mg to the sum of La and element A is in excess of 0.5, the lithium ion conductivity of the LLZ lithium ion conductive powder is reduced.

When the LLZ lithium ion conductive powder satisfies the aforementioned (b); i.e., when the LLZ lithium ion conductive powder contains Li, La, Zr, and element A so as to satisfy the mole ratio conditions (1) and (3), the LLZ lithium ion conductive powder exhibits good lithium ion conductivity. Although the mechanism therefor has not clearly been elucidated, a conceivable reason is as follows. In the case where, for example, the LLZ lithium ion conductive powder contains element A, the ionic radius of La is almost equivalent to that of element A, and thus element A is readily placed in La sites where La is originally present in the LLZ crystal phases. When element A replaces La, the crystal lattice deforms, and free Li ions increase due to the difference in amount of electric charge between La and element A, thereby conceivably improving lithium ion conductivity. In the LLZ lithium ion conductive powder, when the mole ratio of Li to the sum of La and element A is smaller than 1.33 or greater than 3, a metal oxide other than the lithium ion conductive powder having a garnet-type crystal structure is readily formed. An increase in the metal oxide content leads to a relative decrease in the amount of the lithium ion conductive powder having a garnet-type crystal structure. Since the metal oxide has low lithium ion conductivity, the lithium ion conductivity of the LLZ lithium ion conductive powder is reduced. An increase in the element A content of the LLZ lithium ion conductive powder leads to placement of element A in La sites. As a result, the lattice deformation increases, and free Li ions increase due to the difference in amount of electric charge between La and element A, thereby improving lithium ion conductivity. When the mole ratio of element A to the sum of La and element A is in excess of 0.67, an element A-containing metal oxide is readily formed. An increase in the element A-containing metal oxide content leads to a relative decrease in the amount of the lithium ion conductive powder having a garnet-type crystal structure. Since the element A-containing metal oxide has low lithium ion conductivity, the lithium ion conductivity of the LLZ lithium ion conductive powder is reduced.

The aforementioned element A is at least one element selected from the group consisting of Ca, Sr, and Ba. Ca, Sr, and Ba are group 2 elements defined in the relevant periodic table, and readily form divalent cations. These elements have almost the same ionic radius. Since the ionic radius of each of Ca, Sr, and Ba is almost the same as that of La, La elements present in the La sites of the LLZ lithium ion conductive powder are readily substituted with Ca, Sr, or Ba. Among these elements A, Sr is preferred, since the LLZ lithium ion conductive powder containing Sr can be readily sintered to thereby achieve high lithium ion conductivity.

When the LLZ lithium ion conductive powder satisfies the aforementioned (c); i.e., when the LLZ lithium ion conductive powder contains Li, La, Zr, Mg, and element A so as to satisfy the mole ratio conditions (1) to (3), the lithium ion conductive powder can be readily sintered, to thereby achieve further improved lithium ion conductivity. When the LLZ lithium ion conductive powder satisfies the aforementioned (d); i.e., when the LLZ lithium ion conductive powder contains Li, La, Zr, Mg, and element A so as to satisfy the mole ratio conditions (4) to (6), the lithium ion conductivity is further improved. Although the mechanism therefor has not clearly been elucidated, a conceivable reason is as follows. In the LLZ lithium ion conductive powder, when, for example, Li in Li sites is substituted by Mg, and La in La sites is substituted by element A, pores are generated at some Li sites, and free Li ions increase. As a result, the lithium ion conductivity may be further improved. More preferably, the LLZ lithium ion conductive powder contains Li, La, Zr, Mg, and Sr so as to satisfy the aforementioned conditions (1) to (3) (in particular (4) to (6)), since, in this case, the resultant lithium ion conductor has high lithium ion conductivity and high relative density.

In any of the aforementioned conditions (a) to (d), the LLZ lithium ion conductive powder preferably contains Zr so as to satisfy the following mole ratio condition (4). When Zr is contained under the condition (4), a lithium ion conductive powder having a garnet-type crystal structure can be readily produced.

(4) $0.33 \leq \mathrm{Zr}/(\mathrm{La} + \mathrm{A}) \leq 1$

B. Modifications:

The technique disclosed in the present specification is not limited to the aforementioned embodiment, but may be modified into various other forms without departing from the gist thereof. For example, the technique may be modified as described below.

The configuration of the complete-solid battery 102 described in the aforementioned embodiment is a mere example, and may be modified into various forms. For example, in the aforementioned embodiment, the lithium ion conductive solid electrolyte is contained in all of the solid electrolyte layer 112, the cathode 114, and the anode 116. However, the lithium ion conductive solid electrolyte may be contained in at least one of the solid electrolyte layer 112, the cathode 114, and the anode 116.

The method for producing the lithium ion conductive solid electrolyte 202 or the complete-solid battery 102 described in the aforementioned embodiment is a mere example, and may be modified into various forms. For example, in the method for producing the lithium ion conductive solid electrolyte 202 described in the aforementioned embodiment, the pressure of pressurization in the heating and pressurization step is 100 MPa or more. However, the pressure of pressurization may be less than 100 MPa. In the method for producing the lithium ion conductive solid electrolyte 202 described in the aforementioned embodiment, when the slurry contains a plurality of aprotic polar solvents, the heating temperature in the heating and pressurization step is lower than the boiling point of at least one aprotic polar solvent. However, the heating temperature may be higher than the boiling points of all the aprotic polar solvents.

The technique disclosed in the present specification is not limited to the solid electrolyte layer or electrode forming the complete-solid battery 102, but can also be applied to a solid electrolyte layer or electrode forming another power storage device (e.g., a lithium-air battery, a lithium flow battery, or a solid capacitor).

The present application is based on U.S. Provisional Patent Application (US 62/926,015) filed on October 25, 2019, the content of which is incorporated herein by reference.

REFERENCE SIGNS LIST

10: pressurizing target; 20: heating/pressurizing apparatus; 21: mold; 22: upper punch; 23: lower punch; 24: cover heater; 102: complete-solid battery; 110: battery body; 112: solid electrolyte layer; 114: cathode; 116: anode; 154: cathode-side collector member; 156: anode-side collector member; 202: lithium ion conductive solid electrolyte; 204: lithium ion conductive solid electrolyte; 206: lithium ion conductive solid electrolyte; 214: cathode active material; and 216: anode active material

**Claims**

1. A lithium ion conductive solid electrolyte which contains a lithium ion conductive powder having a garnet-type crystal structure including at least Li, La, Zr, and O, and a lithium ion conductive polymer, wherein

   the lithium ion conductive solid electrolyte can maintain its shape without use of an additional polymer different from the lithium ion conductive polymer, and
   exhibits an activation energy of 30 kJ/mol or less at 20°C to 80°C.

2. A lithium ion conductive solid electrolyte according to claim 1, wherein
   the amount by volume of the lithium ion conductive powder is 80 vol% or more relative to 100 vol% of the total amount of the lithium ion conductive powder and the lithium ion conductive polymer.

3. A method for producing a lithium ion conductive solid electrolyte which contains a lithium ion conductive powder having a garnet-type crystal structure including at least Li, La, Zr, and O, the method comprising

   a slurry preparation step of preparing a slurry containing a lithium salt, a polymer, the lithium ion conductive powder, and at least one aprotic polar solvent; and
   a heating and pressurization step of heating the slurry under pressurization, thereby producing a lithium ion conductive solid electrolyte containing the lithium ion conductive powder and a lithium ion conductive polymer, wherein
   the temperature of heating in the heating and pressurization step is higher than the boiling point of said at least one aprotic polar solvent and lower than the decomposition temperature of the polymer.

4. A lithium ion conductive solid electrolyte production method according to claim 3, wherein

the slurry contains a plurality of aprotic polar solvents.

5. A lithium ion conductive solid electrolyte production method according to claim 4, wherein
the temperature of heating in the heating and pressurization step is higher than the boiling point of at least one aprotic polar solvent of the plurality of aprotic polar solvents, and lower than the boiling point of at least one other aprotic polar solvent of the aprotic polar solvents.

6. A lithium ion conductive solid electrolyte production method according to any one of claims 3 to 5, wherein
the pressure of pressurization in the heating and pressurization step is 100 MPa or more.

# FIG. 1

# FIG. 2

# FIG. 3

```
┌─────────────────────────────────────────┐
│  METHOD FOR PRODUCING LITHIUM ION        │
│  CONDUCTIVE SOLID ELECTROLYTE 202        │
└─────────────────────────────────────────┘
                    │
                    ▼
┌─────────────────────────────────────────┐
│  MIX LLZ, LITHIUM SALT, POLYMER, AND     │──S110
│  SOLVENT TO PREPARE SLURRY               │
└─────────────────────────────────────────┘
                    │
                    ▼
┌─────────────────────────────────────────┐
│  HEAT SLURRY UNDER PRESSURIZATION        │
│  TO PRODUCE LITHIUM ION CONDUCTIVE       │──S120
│  SOLID ELECTROLYTE 202                   │
└─────────────────────────────────────────┘
                    │
                    ▼
               ┌─────────┐
               │   END   │
               └─────────┘
```

# FIG. 4

EP 4 049 974 A1

| SAMPLE NO. | LLZ POWDER | POLYMER | LITHIUM SALT | SOL-VENT A | SOL-VENT B | HEATING TEMP (°C) | LLZ CONTENT (VOL%) | POLYMER: LITHIUM SALT (MASS RATIO) | DEN-SITY (%) | ION CONDUCTIV-ITY (ROOM TEMP.) (S/cm) | ACTIVATION ENERGY (kJ/mol) | ACTIVATION ENERGY MEASURE-MENT TEMP. (°C) | TOTAL EVALU-ATION |
|---|---|---|---|---|---|---|---|---|---|---|---|---|---|
| S1 | LLZ-Ta | PEO | LiTFSI | ACN | – | 120 | 87 | 2:1 | 80 | $1.1 \times 10^{-4}$ | 26.36 | 20~80 | ○ |
| S2 | LLZ-Mg,Sr | PEO | LiTFSI | ACN | – | 100 | 90 | 2:1 | 85 | $3.4 \times 10^{-4}$ | 9.79 | 20~80 | ○ |
| S3 | LLZ-Mg,Sr | PPC | LiClO₄ | ACN | DMF | 120 | 90 | 2:1 | 85 | $5.6 \times 10^{-4}$ | 12.17 | 20~80 | ○ |
| S4 | LLZ-Mg,Sr | – | – | – | – | – | 100 | – | 64 | – | – | – | × |
| S5 | LLZ-Mg,Sr | PEO | LiTFSI | ACN | – | 250 | 87 | 2:1 | 92 | $9.6 \times 10^{-10}$ | – | – | × |
| S6 | LLZ-Mg,Sr | PEO | LiTFSI | – | – | 120 | 87 | 2:1 | 83 | $2.2 \times 10^{-8}$ | – | – | × |
| S7 | LLZ-Mg,Sr | PEO | – | ACN | – | 120 | 87 | – | 85 | $2.7 \times 10^{-9}$ | – | – | × |
| R1 | LLZ | PEO | LiTFSI | ACN | – | 60 | 0 | 8:1 (MOLE RATIO) | – | $9.55 \times 10^{-6}$ | 93.03 | 30~60 | – |
| R2 | LLZ | PEO | LiTFSI | ACN | – | 60 | 0.5 | 8:1 (MOLE RATIO) | – | $2.31 \times 10^{-5}$ | 82.34 | 30~60 | – |
| R3 | LLZ | PEO | LiTFSI | ACN | – | 60 | 1.0 | 8:1 (MOLE RATIO) | – | $4.66 \times 10^{-5}$ | 70.19 | 30~60 | – |
| R4 | LLZ | PEO | LiTFSI | ACN | – | 60 | 1.7 | 8:1 (MOLE RATIO) | – | $6.97 \times 10^{-5}$ | 66.20 | 30~60 | – |
| R5 | LLZ | PEO | LiTFSI | ACN | – | 60 | 2.4 | 8:1 (MOLE RATIO) | – | $1.78 \times 10^{-5}$ | 83.49 | 30~60 | – |

# FIG. 5

FIG. 6

## INTERNATIONAL SEARCH REPORT

| International application No. |
| --- |
| PCT/JP2020/039971 |

A. CLASSIFICATION OF SUBJECT MATTER
C01G25/00(2006.01)i; H01M10/056(2010.01)i; H01M10/0562(2010.01)i; H01M10/0565(2010.01)i
FI: H01M10/056; H01M10/0562; H01M10/0565; C01G25/00
According to International Patent Classification (IPC) or to both national classification and IPC

B. FIELDS SEARCHED

Minimum documentation searched (classification system followed by classification symbols)
H01M10/05-10/0587; C01G25/00

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | WO 2017/046915 A1 (TOSHIBA CORP.) 23 March 2017 (2017-03-23) paragraphs [0026], [0079], [0097], example 1, table 1, fig. 14 | 1, 2<br>5, 6 |
| X<br>Y<br>A | JP 2019-505074 A (KOREA INSTITUTE OF INDUSTRIAL TECHNOLOGY) 21 February 2019 (2019-02-21) paragraphs [0008], [0009], [0058], [0062], [0071]–[0073], [0075], [0079] | 3<br>4<br>5-6 |
| Y<br>A | KR 10-2018-0084236 A (KOREA INSTITUTE OF INDUSTRIAL TECHNOLOGY) 25 July 2018 (2018-07-25) paragraphs [0005], [0033], [0037] | 4<br>5, 6 |
| A | JP 2019-102301 A (KOGAKUIN UNIVERSITY) 24 June 2019 (2019-06-24) claims 1, 2, paragraphs [0043], [0044] | 1-6 |
| A | WO 2019/052648 A1 (TOYOTA MOTOR EUROPE) 21 March 2019 (2019-03-21) claims 1, 2, specification, page 21, lines 1-19 | 1-6 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 December 2020 (15.12.2020) | 28 December 2020 (28.12.2020) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

| | International application No. |
|---|---|
| | PCT/JP2020/039971 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2018/193628 A1 (HITACHI CHEMICAL CO., LTD.) 25 October 2018 (2018-10-25) I | 1-6 |
| A | CN 108963332 A (ZHUHAI SMOOTHWAY ELECTRONIC MATERIALS CO., LTD.) 07 December 2018 (2018-12-07) paragraphs [0033], [0034] | 1-6 |
| A | KR 10-2016-0079405 A (HYUNDAI MOTOR COMPANY) 06 July 2016 (2016-07-06) paragraphs [0062], [0063] | 1-6 |
| A | CN 110224107 A (SAIC MOTOR CORPORATION LIMITED) 10 September 2019 (2019-09-10) paragraph [0089] | 1-6 |

Form PCT/ISA/210 (continuation of second sheet) (January 2015)

INTERNATIONAL SEARCH REPORT

Information on patent family members

International application No.

PCT/JP2020/039971

| Patent Documents referred in the Report | Publication Date | Patent Family | Publication Date |
|---|---|---|---|
| WO 2017/046915 A1 | 23 Mar. 2017 | US 2017/0358825 A1 paragraphs [0045], [0100], [0118], example 1, table 1, fig. 14 EP 3352277 A1 CN 107431241 A | |
| JP 2019-505074 A | 21 Feb. 2019 | US 2019/0051934 A1 paragraphs [0008], [0009], [0066], [0074], [0087]- [0089], [0091], [0096] WO 2017/135553 A1 KR 10-2017-0092262 A | |
| KR 10-2018-0084236 A | 25 Jul. 2018 | (Family: none) | |
| JP 2019-102301 A | 24 Jun. 2019 | (Family: none) | |
| WO 2019/052648 A1 | 21 Mar. 2019 | (Family: none) | |
| WO 2018/193628 A1 | 25 Oct. 2018 | EP 3614480 A1 paragraph [0126] CN 110537283 A KR 10-2019-0133697 A | |
| CN 108963332 A | 07 Dec. 2018 | (Family: none) | |
| KR 10-2016-0079405 A | 06 Jul. 2016 | (Family: none) | |
| CN 110224107 A | 10 Sep. 2019 | (Family: none) | |

Form PCT/ISA/210 (patent family annex) (January 2015)

**EP 4 049 974 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016040767 A

- US 62926015 B

**Non-patent literature cited in the description**

- Solid polymer electrolytes incorporating cubic Li7La3Zr2O12 for all-solid-state lithium rechargeable batteries. Electrochimica Acta. Elsevier, 20 December 2017, vol. 258, 1106-1114